Europäisches Patentamt

European Patent Office

Office européen des brevets

(11) Veröffentlichungsnummer: **0 378 739**
**A2**

# (12) EUROPÄISCHE PATENTANMELDUNG

(21) Anmeldenummer: **89106091.5**

(22) Anmeldetag: **07.04.89**

(51) Int. Cl.⁵: **B60K 37/02**

(30) Priorität: **18.01.89 US 300099**

(43) Veröffentlichungstag der Anmeldung:
**25.07.90 Patentblatt 90/30**

(84) Benannte Vertragsstaaten:
**DE FR GB**

(71) Anmelder: **VDO Adolf Schindling AG**
**Gräfstrasse 103**
**D-6000 Frankfurt/Main 90(DE)**

(72) Erfinder: **Ritzenthaler, Hugo A.**
**1343 Chestnut Lane**
**Rochester Hills, M. 48309(US)**

(74) Vertreter: **Klein, Thomas, Dipl.-Ing. (FH)**
**Sodener Strasse 9 Postfach 6140**
**D-6231 Schwalbach a. Ts.(DE)**

(54) **Kombinationsinstrument.**

(57) Die Erfindung bezieht sich auf ein Kombinationsinstrument, insbesondere für Kraftfahrzeuge, das einen Instrumententräger (10) aufweist, an den mehrere Anzeigeeinheiten montierbar sind. Weiterhin weist das Kombinationsinstrument eine beobachterseitig vor dem Instrumententräger (10) angeordnete, alle Anzeigeeinheiten gemeinsam überdeckende Sichtscheibe (5) auf. Die Anzeigeeinheiten sind von der einem Beobachter abgewandten Seite her an den Instrumententräger (10) montierbar.

Figur 1

EP 0 378 739 A2

## Kombinationsinstrument

Die Erfindung bezieht sich auf ein Kombinationsinstrument, insbesondere für Kraftfahrzeuge, mit einem Instrumententräger, an den mehrere Anzeigeeinheiten montierbar sind, und mit einer beobachterseitig vor dem Instrumententräger angeordneten, alle Anzeigeeinheiten gemeinsam überdekkenden Sichtscheibe.

Bei derartigen Kombinationsinstrumenten ist es bekannt, die Anzeigeeinheiten von der einem Beobachter zugewandten Seite her in Montageöffnungen des Instrumententrägers einzusetzen und zu befestigen. Dazu ist es erforderlich, daß die Sichtscheibe während der Montage der Anzeigeeinheiten entfernt wird. Insbesondere beim Auswechseln einer defekten Anzeigeeinheit ist dies von Nachteil, da zum einen der Arbeitsaufwand groß ist und zum anderen die Gefahr besteht, daß durch nicht ausreichende Sorgfalt beim Wiedereinbau der Sichtscheibe diese den Raum zwischen Sichtscheibe und Instrumententräger nicht mehr einwandfrei gegen Eindringen von Staub und Feuchtigkeit schützt.

Aufgabe der Erfindung ist es daher, ein Kombinationsinstrument nach dem Oberbegriff zu schaffen, das in hohem Maß gegen Eindringen von Umweltschmutz in den zwischen Sicht scheibe und Instrumententräger gebildeten Raum geschützt ist.

Diese Aufgabe wird erfindungsgemäß dadurch gelöst, daß die Anzeigeeinheiten von der einem Beobachter abgewandten Seite her an den Instrumententräger montierbar sind. Durch diese Lösung wird insbesondere bei Kombinationsinstrumenten die in Booten oder landwirtschaftlichen Fahrzeugen eingebaut sind, ein Eindringen von Feuchtigkeit und Schmutz in den Raum zwischen Sichtscheibe und Instrumententräger sowie in die Gehäuse der Anzeigeeinheiten sicher verhindert. Ein solches Eindringen von Feuchtigkeit und Schmutz würde zum Beschlagen und Beschmutzen der Innenseite der Sichtscheibe führen, so daß kein einwandfreies Ablesen der Anzeige mehr möglich wäre. Außerdem kann der Schmutz und die Feuchtigkeit zu Defekten der Anzeigeeinrichtung führen. Bei dem erfindungsgemäßen Kombinationsinstrument erfolgt ein Einbau der Sichtscheibe nur bei der Herstellung des Kombinationsinstruments und kann dabei mit der erforderlichen Sorgfalt erfolgen. Ein späterer Austausch von Anzeigeeinheiten erfolgt von der dem Beobachter abgewandten Seite des Kombinationsinstruments her.

Vorzugsweise sind Anzeigeeinheiten in Montageöffnungen des Instrumententrägers einsetzbar und weisen beobachterseitig eine dem Querschnitt der ihr zugeordneten Montageöffnung entsprechende Anzeigefläche auf.

Ist die Anzeigeeinheit ein Zeigerinstrument und die Anzeigefläche ein Ziffernblatt, so kann vor Einbau des Anzeigeinstruments eine Justage der Zeigerstellung zur Skala des Ziffernblattes erfolgen. Eine aufwendige Justage der Zeigerstellung zu einer Skala auf dem Instrumententräger nach Einbau des Zeigerinstruments ist so nicht nötig.

Beobachterseitig kann eine Hauptanzeigescheibe an dem Instrumententräger angeordnet sein, die die Anzeigeflächen der Anzeigeeinheiten freilassende Sichtöffnungen aufweist.

Zur einfachen Bestimmung der axialen Einbaulage können die Anzeigeeinheiten bis zur Anlage an an dem Instrumententräger angeordneten Anschlägen in die Montageöffnungen des Instrumententrägers einführbar sein.

Zur einfachen Befestigung einer Anzeigeeinheit in einer Montageöffnung kann die Anzeigeeinheit an ihrer in die Montageöffnung einsetzbaren Umfangsfläche derart radial hervorstehende gummielastische Rippen aufweisen, daß die radiale Erstrekkung der Anzeigeeinheit um ein geringes Maß größer ist als die radiale Erstreckung der Montageöffnung. Die Anzeigeeinheit braucht dabei nur in die Montageöffnung bis in seine Einbaulage eingeschoben zu werden.

Vorzugsweise sind die Rippen radial umlaufende Rippen mit sägezahnförmigem Querschnitt, die widerhakenartig zur dem Beobachter abgewandten Seite gerichtet sind. Diese Ausbildung ermöglicht ein leichtes Einschieben der Anzeigeeinheit in die Montageöffnung und hält die Anzeigeeinheit mit einer bestimmten Vorspannung in Anlage an dem Anschlag. Gleichzeitig bilden die Rippen eine Abdichtung des Raumes zwischen Sichtscheibe und Instrumententräger gegenüber dem Bereich hinter dem Kombinationsinstrument.

Eine andere Möglichkeit zur einfachen Befestigung einer Anzeigeeinheit in einer Montageöffnung besteht darin, daß an der in die Montageöffnung einsetzbaren Umfangsfläche der Anzeigeeinheit und an der Innenwand der Montageöffnung eine Bajonettverbindung bildende, radial hervorstehende Vorsprünge bzw. Schraubkeile ausgebildet sind. Durch schraubartiges Ein- bzw. Ausdrehen der Anzeigeeinheit in die Montageöffnung erfolgt auf einfache und schnelle Weise eine Montage bzw. Demontage der Anzeigeeinheit.

Ist dabei ein die Anzeigeeinheit radial umlaufend umschließender Dichtring mit Vorspannung an die Innenwand der Montageöffnung anlegbar, so erfolgt gleichzeitig eine Abdichtung des Raumes zwischen Sichtscheibe und Instrumententräger zur Rückseite des Kombinationsinstruments.

In einer dritten Ausführungsform können zur Befestigung der Anzeigeeinheit an der dem Beobachter abgewandten Seite des Instrumententrägers hervorstehend, axial zur Montageöffnung und an deren Umfang verteilt Gewindebolzen angeordnet sein, zwischen denen sich ein an einem Anschlag der Anzeigeeinheit anliegendes Spannelement erstreckt, das durch auf die Gewindebolzen aufgeschraubte Muttern gegen den Instrumententräger bewegbar und die Anzeigeeinheit gegen die Anschläge des Instrumententrägers spannbar ist.

Dabei kann in einfacher Weise das Spannelement ein die Anzeigeeinrichtung radial umschließender Flansch sein, der an einem radial hervorstehenden, umlaufenden Anschlagflansch der Anzeigeeinheit in Anlage ist.

Umschließt ein elastisches Dichtelement die Anzeigeeinrichtung radial, wobei das Dichtelement zwischen Instrumententräger, Flansch und Anschlagflansch unter Vorspannung in Anlage ist, so erfolgt auch hier eine Abdichtung des Raumes zwischen Sichtscheibe und Instrumententräger zur Rückseite des Kombinationsinstruments hin.

Eine Beleuchtung der dem Beobachter zugewandten Seite des Kombinationsinstruments durch eine bei Defekt leicht austauschbare Lichtquelle, wird dadurch erreicht, daß auf der dem Beobachter abgewandten Seite des Instrumententrägers eine Lichtquelle angeordnet ist, deren Licht durch eine im radial äußeren Bereich des Instrumententrägers ausgebildete, durchgehende Ausnehmung einem Reflektor zuleitbar ist, der im radial umlaufenden Randbereich der Sichtscheibe zwischen Sichtscheibe und Instrumententräger angeordnet ist und das Licht auf die Beobachterseite des Instrumententrägers bzw. der Hauptanzeigescheibe reflektiert. Zum Austauschen einer defekten Lichtquelle ist es somit nicht erforderlich, den Raum zwischen Sichtscheibe und Instrumententräger zu öffnen. Eine besonders gute Abdichtung wird dadurch erreicht, daß das Licht über einen die Ausnehmung durchragenden Lichtleiter von der Lichtquelle dem Reflektor zuleitbar ist.

Ist der Reflektor ein zwischen einem axialen Anschlag und dem Randbereich der Sichtscheibe eingespanntes Reflektorblech, so bildet er gleichzeitig eine Blende zum Beobachter hin, so daß von diesem der Bereich in dem das Licht in den Raum zwischen Sichtscheibe und Instrumententräger eingeleitet wird nicht gesehen werden kann.

Vorzugsweise ist der axiale Anschlag radial umlaufend an einem Gehäuse des Kombinationsinstrument ausgebildet.

Zur beobachterseitigen Abdichtung kann zwischen dem axialen Anschlag und der Sichtscheibe sowie dem Reflektorbleck ein radial umlaufender Dichtring angeordnet sein.

Ausführungsbeispiele der Erfindung sind in der Zeichnung dargestellt und werden im folgenden näher beschrieben. Es zeigen

Figur 1 eine Ansicht eines Kombinationsinstruments

Figur 2 einen Teilausschnitt eines Kombinationsinstruments mit einem ersten Ausführungsbeispiel einer Befestigung einer Anzeigeeinheit im Schnitt

Figur 3 einen Teilausschnitt eines Kombinationsinstruments mit einem zweiten Ausführungsbeispiel einer Befestigung einer Anzeigeeinheit im Schnitt

Figur 4 einen Teilausschnitt eines Kombinationsinstruments mit einem beleuchtbaren Anzeigefeld im Schnitt

Figur 5 ein viertes Ausführungsbeispiel einer Befestigung einer Anzeigeeinheit im Schnitt.

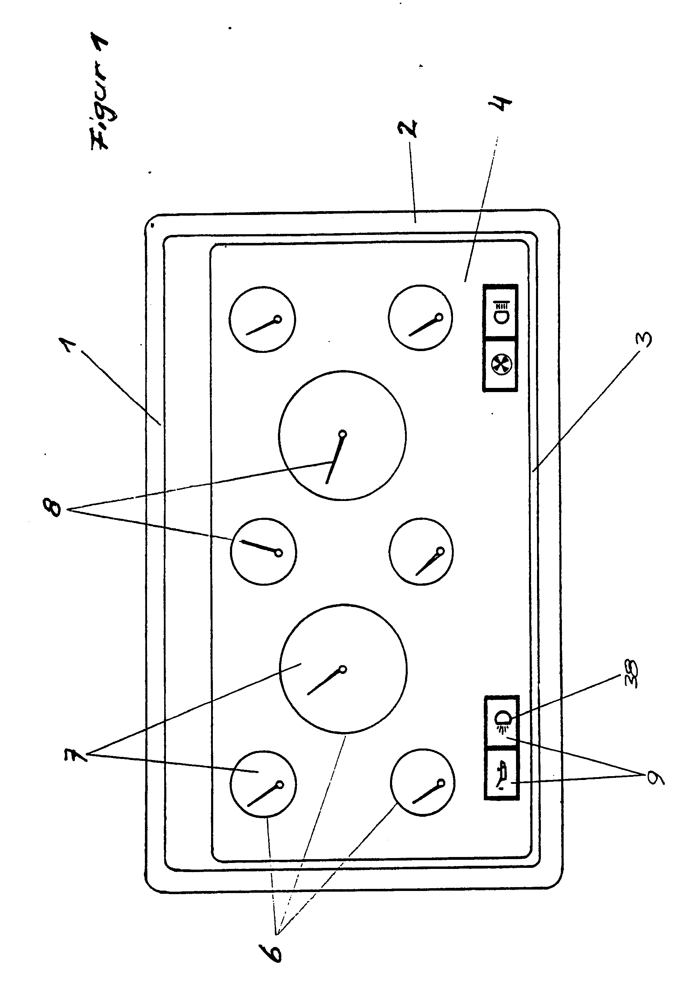

Das in Figur 1 in der Ansicht dargestellte Kombinationsinstrument ist in das Armaturenbrett eines Kraftfahrzeuges einbaubar und weist ein Gehäuse 1 mit einem rechteckförmigen, zu einem Beobachter hin vorstehenden Rand 2 auf.

In den Rand 2 ist ein radial umlaufendes rechteckringförmiges Reflektorblech 3 sowie eine das Reflektorblech 3 sowie die Beobachterseite einer Hauptanzeigescheibe 4 abdeckende Sichtscheibe 5 eingesetzt.

Durch Sichtscheiben 6 der Hauptanzeigescheibe 4 sind die Ziffernblätter 7 und Zeiger 8 von Zeigerinstrumenten 22 zu sehen. Dabei besitzen die Zeiger 8 geringere radiale Erstreckungen als die Sichtöffnungen 6, um problemlos durch die Sichtöffnungen 6 hindurchgeführt werden zu können. Weiterhin sind auf der Hauptanzeigescheibe 4 beleuchtbare Anzeigefelder 9 angeordnet.

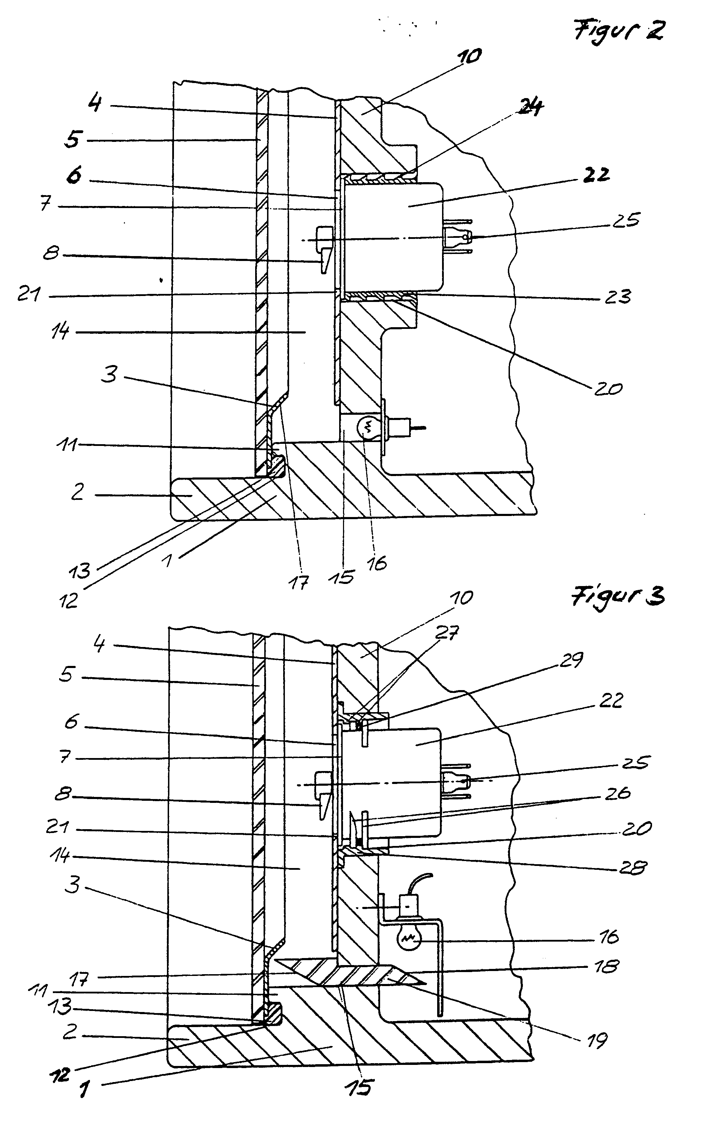

In den Figuren 2 bis 5 sind die Gehäuse 1 einteilig mit Instrumententrägern 10 ausgebildet, die beobachterseitig die Hauptanzeigescheibe 4 tragen. Der Rand 2 des Gehäuses 1 ist mit einem radial nach innen hervorstehenden umlaufenden Anschlag 11 ausgebildet, der eine beobachterseitig offene Ringnut 12 aufweist, in die ein radial umlaufender Dichtring 13 eingelegt ist.

Gegen den Anschlag 11 und den Dichtring 13 axial anliegend sind das Reflektorblech 3 und die Sichtscheibe 5 derart in die durch den Rand 2 gebildete Sichtöffnung des Gehäuses 1 eingesetzt, daß der zwischen Sichtscheibe 5 und Instrumententräger 10 gebildeter Raum 14 zur Beobachterseite hin abgedichtet ist.

Im radial äußeren Bereich des Instrumententrägers 10 sind axial durchgehende Ausnehmungen 15 ausgebildet, durch die Licht in den Raum 14 einleitbar ist.

In Figur 2 ist eine Lichtquelle 16 in dem dem Beobachter abgewandten Ende der Ausnehmung 15, diese gleichzeitig verschließend, angeordnet. Ihr Licht trifft auf den an der ihr zugewandten Seite des Reflektorblechs 3 ausgebildeten Reflektor 17 auf und wird von dort auf die Hauptanzeigescheibe 4 reflektiert.

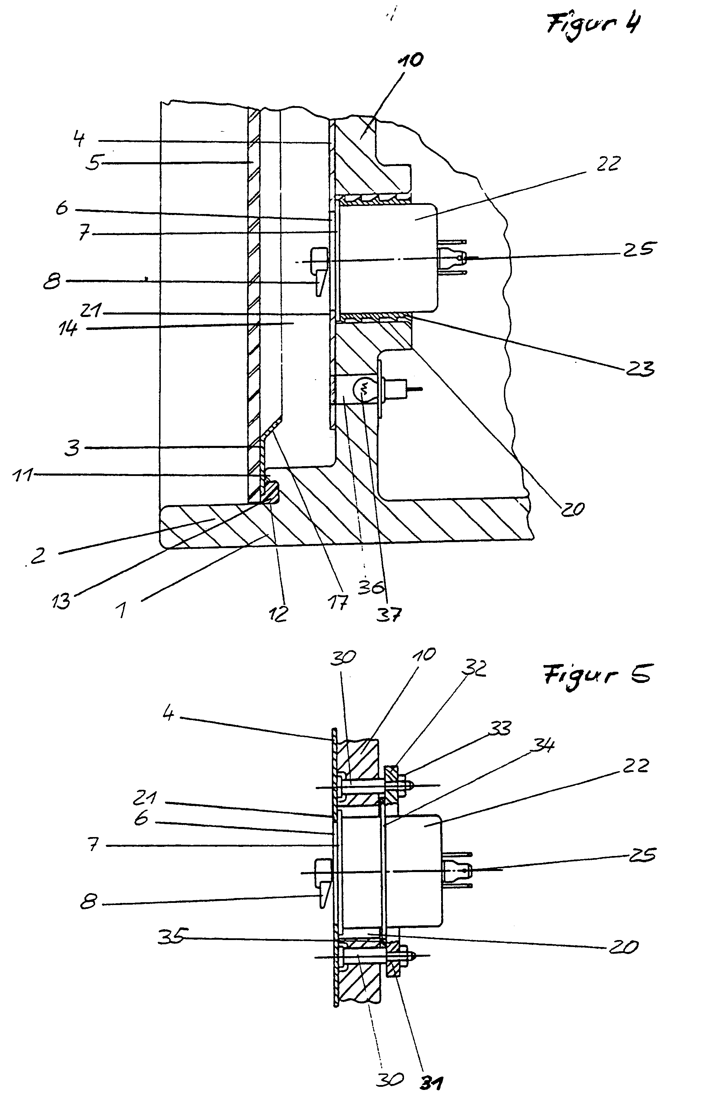

In Figur 3 ist eine Lichtquelle 16 hinter dem Instrumententräger 10 befestigt. Ihr Licht wird über eine Einkoppelfläche 18 in einen Lichtleiter 19 eingekoppelt, der durch die Ausnehmung 15 in den Raum 14 ragt. An dem in den Raum 14 ragenden Ende des Lichtleiters 19 ist eine als Reflektor 17 ausgebildete Umlenkfläche vorhanden, von der das auf sie auftreffende Licht der Lichtquelle 16 auf die Hauptanzeigescheibe 4 reflektiert wird.

Koaxial zu den kreisförmigen Sichtöffnungen 6 der Hauptanzeigescheibe 4 sind im Instrumententräger 10 durchgehende, kreisrunde Montageöffnungen 20 ausgebildet, deren Durchmesser jeweils etwas größer ist als der jeweilige Durchmesser der Sichtöffnungen 6. Die dadurch radial nach innen, gegenüber den Montageöffnungen 20 hervorstehenden Ringbereiche der Hauptanzeigescheibe 4 bilden Anschläge 21 bis an deren Anlage von der dem Beobachter abgewandten Seite her, die zylindrische Gehäuse aufweisenden Zeigerinstrumente 22 in die Montageöffnungen 20 einführbar sind. Die Zifferblätter 7 der Zeigerinstrumente 22 haben eine etwas weitere radiale Erstreckung als die Sichtöffnungen 6, so daß diese von den Ziffernblättern 7 vollständig abgedeckt sind.

An der dem Beobachter abgewandten Seite besitzen die Zeigerinstrumente 22 Anschlußkontakte 25 zur Verbindung mit einer nicht dargestellten Ansteuereinheit.

In Figur 2 ist die zylindrische Mantelfläche des Gehäuses des Zeigerinstruments 22 von einer Hülse 23 aus gummielastischem Werkstoff fest umschlossen, deren radial äußere Umfangsfläche mit radial hervorstehenden und umlaufenden Rippen 24 versehen ist, die einen sägezahnförmigen Querschnitt besitzen und widerhakenartig zur dem Beobachter abgewandten Seite gerichtet sind. Die radiale Erstreckung der Rippen 24 ist um ein geringes Maß größer als der Durchmesser der Montageöffnung 20, so daß sie beim Einführen in die Montageöffnung 20 elastisch deformiert werden und so das Zeigerinstrument 22 unter elastischer Vorspannung in der Montageöffnung 22 halten.

In Figur 3 sind an der zylindrischen Mantelfläche des Gehäuses des Zeigerinstruments 22 radial hervorstehende Vorsprünge 26 angeordnet, die in entsprechende Schraubkeile 27 einer die Montageöffnung 20 bildenden, in den Instrumententräger 10 fest eingesetzten Büchse 28 eingreifen und mit diesen eine Bajonettverbindung bilden.

Zwischen zwei axial nebeneinander angeordneten Vorsprüngen 26 ist ein das Gehäuse des Zeigerinstruments 22 fest umschließender, elastischer Dichtring 29 angeordnet, der in der dargestellten Einbauposition unter Vorspannung an der Innenwand der Montageöffnung 20 in Anlage ist.

In Figur 5 sind diametral sich gegenüberliegend auf jeder Seite der Montageöffnung 20 zwei axial zur Montageöffnung 20 sich erstreckende, zu der dem Beobachter abgewandten Seite hin hervorstehende Gewindebolzen 30 am Instrumententräger 10 befestigt.

Die hervorstehenden Gewindebolzen 30 durchragen Bohrungen 31 eines das Gehäuse des Zeigerinstruments 22 radial umschließenden Flansches 32. Durch auf die freien Enden der Gewindebolzen 30 aufgeschraubte Muttern 33 wird der Flansch 32 zur axialen Anlage an einen radial hervorstehenden und umlaufenden Anschlagflansch 34 des Gehäuses des Zeigerinstrumentes 22 gezogen und dieses gegen die den Anschlag 21 bildende Hauptanzeigescheibe 4 verspannt.

Ein das Zeigerinstrument 22 im Bereich des Anschlageflansches 34 radial umschließendes, elastisches Dichtelement 35 ist in Einbauposition zwischen Instrumententräger 10, Flansch 32 und Anschlagflansch 34 unter elastischer Vorspannung gehalten.

In Figur 4 besitzt der Instrumententräger 10 eine weitere durchgehende Ausnehmung 36, in die von der Rückseite eine Lichtquelle 37 eingesetzt ist. Im Bereich der Ausnehmung 36 ist die Hauptanzeigescheibe 4 transparent ausgebildet und mit einem Symbolaufdruck 38 versehen und bildet so eines der Anzeigefelder 9.

Die Befestigung des Anzeigeinstruments 22 in Figur 4 entspricht der Ausführungsform nach Figur 2.

## Ansprüche

1. Kombinationsinstrument, insbesondere für Kraftfahrzeuge, mit einem Instrumententräger, an den mehrere Anzeigeeinheiten montierbar sind, und mit einer beobachterseitig vor dem Instrumententräger angeordneten, alle Anzeigeeinheiten gemeinsam überdeckende Sichtscheibe, dadurch gekennzeichnet, daß die Anzeigeeinheiten von der einem Beobachter abgewandten Seite her an den Instrumententräger (10) montierbar sind.

2. Kombinationsinstrument nach Anspruch 1, dadurch gekennzeichnet, daß eine Anzeigeeinheit in eine Montageöffnung (20) des Instrumententrägers (10) einsetzbar ist.

3. Kombinationsinstrument nach Anspruch 2, dadurch gekennzeichnet, daß eine Anzeigeeinheit beobachterseitig eine dem Querschnitt der ihr zugeordneten Montageöffnung (20) entsprechende Anzeigefläche aufweist.

4. Kombinationsinstrument nach Anspruch 3, dadurch gekennzeichnet, daß die Anzeigeeinheit ein Zeigerinstrument (22) und die Anzeigefläche ein Ziffernblatt (7) ist.

5. Kombinationsinstrument nach einem der vorhergehenden Ansprüche, dadurch gekennzeichnet, daß beobachtersei tig eine Hauptanzeigescheibe (4) an den Instrumententräger (10) angeordnet ist, die die Anzeigeflächen der Anzeigeeinheiten freilassende Sichtöffnungen (6) aufweist.

6. Kombinationsinstrument nach einem der vorhergehenden Ansprüche, dadurch gekennzeichnet, daß die Anzeigeeinheiten bis zur Anlage an an dem Instrumententräger (10) angeordneten Anschlägen (21) in die Montageöffnungen (20) des Instrumententrägers (10) einführbar sind.

7. Kombinationsinstrument nach einem der vorhergehenden Ansprüche, dadurch gekennzeichnet, daß eine Anzeigeeinheit an ihrer in die Montageöffnung (20) einsetzbaren Umfangsfläche derart radial hervorstehende, gummielastische Rippen (24) aufweist, daß die radiale Erstreckung der Anzeigeeinheit um ein geringes Maß größer ist als die radiale Erstreckung der Montageöffnung (20).

8. Kombinationsinstrument nach Anspruch 7, dadurch gekennzeichnet, daß die Rippen (24) radial umlaufende Rippen mit sägezahnförmigem Querschnitt sind, die widerhakenartig zur dem Beobachter abgewandten Seite gerichtet sind.

9. Kombinationsinstrument nach einem der Ansprüche 1 bis 6, dadurch gekennzeichnet, daß an der in die Montageöffnung (20) einsetzbaren Umfangsfläche der Anzeigeeinheit und an der Innenwand der Montageöffnung (20) eine Bajonettverbindung bildende, radial hervorstehenden Vorsprünge (26) bzw. Schraubkeile (27) ausgebildet sind.

10. Kombinationsinstrument nach Anspruch 9, dadurch gekennzeichnet, daß ein die Anzeigeeinheit radial umlaufend umschließender, elastischer Dichtring (29) mit Vorspannung an die Innenwand der Montageöffnung (20) anlegbar ist.

11. Kombinationsinstrument nach einem der Ansprüche 1 bis 6, dadurch gekennzeichnet, daß an der dem Beobachter abgewandten Seite des Instrumententrägers (10) hervorstehend, axial zur Montageöffnung (20) und an deren Umfang verteilt, Gewindebolzen (30) angeordnet sind, zwischen denen sich ein an einem Anschlag der Anzeigeeinrichtung anliegendes Spannelement erstreckt, das durch die auf die Gewindebolzen (30) aufgeschraubten Muttern (33) gegen den Instrumententräger (10) bewegbar und die Anzeigeinheit gegen den Anschlag 21 des Instrumententrägers (10) spannbar ist.

12. Kombinationsinstrument nach Anspruch 11, dadurch gekennzeichnet, daß das Spannelement ein die Anzeigeeinrichtung radial umschließender Flansch (32) ist, der an einem radial hervorstehenden umlaufenden Anschlagflansch (34) der Anzeigeinheit in Anlage ist.

13. Kombinationsinstrument nach Anspruch 12, dadurch gekennzeichnet, daß ein elastisches Dichtelement (35) die Anzeigeeinrichtung radial umschließt, wobei das Dichtelement (35) zwischen Instrumententräger (10), Flansch (32) und Anschlagflansch (34) unter Vorspannung in Anlage ist.

14. Kombinationsinstrument nach einem der vorhergehenden Ansprüche, dadurch gekennzeichnet, daß auf der dem Beobachter abgewandten Seite Instrumententrägers (10) eine Lichtquelle (16) angeordnet ist, deren Licht durch eine im radial äußeren Bereich des Instrumententrägers (10) ausgebildete, durchgehende Ausnehmung (15) einem Reflektor (17) zuleitbar ist, der im radial umlaufenden Randbereich der Sichtscheibe (5) zwischen Sichtscheibe (5) und Instrumententräger (10) angeordnet ist und das Licht auf die Beobachterseite des Instrumententrägers (10) bzw. der Hauptanzeigescheibe (4) reflektiert.

15. Kombinationsinstrument nach Anspruch 14, dadurch gekennzeichnet, daß das Licht über einen die Ausnehmung (15) durchragenden Lichtleiter (19) von der Lichtquelle (16) dem Reflektor (17) zuleitbar ist.

16. Kombinationsinstrument nach Anspruch 14, dadurch gekennzeichnet, daß der Reflektor (17) ein zwischen dem axialen Anschlag (11) und dem Randbereich der Sichtscheibe (5) eingespanntes Reflektorblech (3) ist.

17. Kombinationsinstrument nach Anspruch 16, dadurch gekennzeichnet, daß der axiale Anschlag (11) radial umlaufend an einem Gehäuse (1) ausgebildet ist.

18. Kombinationsinstrument nach Anspruch 17, dadurch gekennzeichnet, daß zwischen dem axialen Anschlag (11) und der Sichtscheibe (5) sowie dem Reflektorblech (3) ein radial umlaufender Dichtring (13) angeordnet ist.

Figur 1

EP 0 378 739 A2

Figur 2

Figur 3

Figur 4

Figur 5